## Europäisches Patentamt
## European Patent Office
## Office européen des brevets

(19)

(11) Numéro de publication: **0 187 571**
**B1**

(12)
# FASCICULE DE BREVET EUROPÉEN

(45) Date de publication du fascicule du brevet:
02.11.88

(51) Int. Cl.⁴: **F 25 B 27/00,** F 25 B 17/08, F 25 B 35/04

(21) Numéro de dépôt: **85402384.3**

(22) Date de dépôt: **03.12.85**

(54) Capteur d'énergie thermique et dispositif incluant un tel capteur.

(30) Priorité: **06.12.84 FR 8418635**

(43) Date de publication de la demande:
**16.07.86 Bulletin 86/29**

(45) Mention de la délivrance du brevet:
**02.11.88 Bulletin 88/44**

(84) Etats contractants désignés:
**DE FR GB IT**

(56) Documents cité:
**EP-A-0 086 383**
**DE-A-1 501 140**
**DE-A-2 739 514**
**DE-C-636 013**
**FR-A-1 029 877**
**FR-A-2 441 134**
**FR-A-2 530 791**
**FR-A-2 562 994**
**GB-A-417 111**
**US-A-2 024 083**

**PATENTS ABSTRACTS OF JAPAN, vol. 7 no. 291 (M-265) 1436 , 27 décembre 1983; & JP - A - 58 164 954 (SUMITOMO KEIKINZOKU KOGYO K.K.) 29.09.1983**

(73) Titulaire: **JEUMONT- SCHNEIDER Société anonyme dite:, 31- 32, Quai de Dion Bouton, F-92811 Puteaux Cedex (FR)**
Titulaire: **BRISSONNEAU ET LOTZ MARINE Société anonyme dite:, Rue de la Métallurgie Zone Industrielle, F-44470 Carquefou- Nantes (FR)**

(72) Inventeur: **Paeye, Gérard, 9, rue Debussy, F-44470 Carquefou (FR)**
Inventeur: **Guiader, Alain, 72, Boulevard Robert Schuman, F-44300 Nantes (FR)**

(74) Mandataire: **Lejet, Christian, Société JEUMONT-SCHNEIDER 31- 32, Quai de Dion Bouton, F-92811 Puteaux Cedex (FR)**

**Description**

La présente invention concerne une amélioration apportée aux capteurs d'énergie thermique utilisés par exemple dans les dispositifs dont le fonctionnement comprend une phase d'adsorption d'un fluide dans un corps et une phase de désorption correspondante, notamment un dispositif réfrigérateur de type solaire, ainsi qu'un tel dispositif.

Un tel dispositif a, par exemple, été décrit dans le brevet FR-2 530 791. Il comprend un capteur d'énergie thermique constitué par un boitier dont l'intérieur est garni d'un corps présentant de fortes capacités d'adsorption ou de désorption d'un fluide.

Ce boitier comprend essentiellement deux faces en regard: l'une, supérieure, est exposée à la source d'énergie; l'autre, inférieure, est généralement raccordée à un conduit.

Le dispositif fonctionne de telle façon que, lorsque le capteur reçoit une énergie thermique, le corps placé dans le capteur rejette par désorption le fluide qu'il contient sous forme de vapeurs vers le conduit.

En l'absence d'énergie thermique, ce même corps adsorbe le fluide qui arrive par le conduit.

L'adsorption et la désorption du fluide s'effectuent essentiellement dans la zone du corps proche du point de raccordement du conduit à la face inférieure du boitier. Dans les zones du corps éloignées de ce point, l'adsorption et la désorption s'effectuent avec un mauvais rendement, le fluide ne pouvant circuler facilement.

De façon à améliorer le rendement du corps adsorbant-désorbant le brevet FR-2 562 994, publié le 18 Octobre 1985, prévoit de ménager un espace entre le corps adsorbant-désorbant et la face inférieure du boitier. Un support-plan, pourvu d'ouvertures, est disposé sous le corps adsorbant-désorbant de façon à maintenir ce dernier contre la face supérieure.

Le conduit met le capteur en communication avec un circuit contenant du fluide, le capteur et le circuit étant hermétiquement clos et purgés d'air.

Ce circuit comprend un évaporateur placé à l'intérieur d'une caisse isolante, une première canalisation reliant l'évaporateur au conduit par l'intermédiaire d'un siphon, une deuxième canalisation reliant le conduit à la partie supérieure d'un condenseur puis, la partie inférieure du condenseur à la partie supérieure de l'évaporateur.

Un dispositif incluant un tel capteur comporte donc plusieurs éléments reliés entre eux par des conduits. De ce fait, le coût de fabrication et les risques de fuite d'un tel dispositif sont relativement élevés.

Le but de la présente invention est d'obvier à ces inconvénients par une modification apportée au capteur d'énergie contenant un tel corps adsorbant-désorbant.

Les principaux avantages apportés par l'invention sont de diminuer les coûts de fabrication du dispositif incluant un tel capteur, d'augmenter la fiabilité d'un tel dispositif et enfin de réduire les pertes de charge au cours de la phase d'adsorption.

La présente invention a donc pour objet un capteur d'énergie thermique, constitué par un boitier comportant une face supérieure exposée à une source d'énergie thermique et une face inférieure à laquelle est raccordé un conduit destiné à être relié avec un dispositif de réfrigération, entre lesquelles est disposé un corps présentant les qualités requises d'adsorption et de désorption d'un fluide.

Selon l'invention, un espace est ménagé entre le corps et la face inférieure, cette dernière formant un condenseur séparé du corps par cet espace. Un dispositif selon l'invention est caractérisé par les caractéritiques de la revendication 8.

De façon avantageuse, des ailettes sont disposées perpendiculairement à la face inférieure.

La présente invention sera mieux comprise et d'autres buts, avantages et caractéristiques de celles-ci apparaîtront plus clairement à la lecture de la description qui suit et à laquelle une planche de dessins est annexée.

- La Figure 1 représente un capteur d'énergie thermique selon l'invention et
- La Figure 2 représente le schéma d'ensemble d'un dispositif réfrigérateur à énergie thermique comprenant un capteur selon l'invention.

En référence maintenant aux Figures, le capteur 6 se présente sous la forme d'un boitier, de préférence en cuivre ou en aluminium. Ce boitier comporte essentiellement deux faces en regard: une face supérieure 8 exposée à la source d'énergie thermique et une face inférieure 9. L'intérieur du capteur 6 est garni d'un corps 10 présentant de fortes capacités d'adsorption ou de désorption d'un fluide tel que la zéolithe qui est un alumino-silicate composé microporeux, le fluide utilisé étant alors de préférence de l'eau, ou tel que du charbon actif, dans ce cas le fluide utilisé est de préférence du méthanol. Dans le capteur 6, un espace 11 est ménagé entre le corps 10 et la face inférieure 9. Le corps 10 est maintenu du côté de la face supérieure 8 grâce à un support-plan 12. Celui-ci est maintenu en place par exemple par des cales latérales. Le corps 10 étant léger, ces cales peuvent n'être disposées que contre les parois internes du boitier. Le support 12 peut être par exemple un grillage, ou une tôle perforée. Les trous pratiqués dans le support doivent être tels que le corps 10 ne puisse tomber dans l'espace 11 et que le support reste perméable pour le fluide.

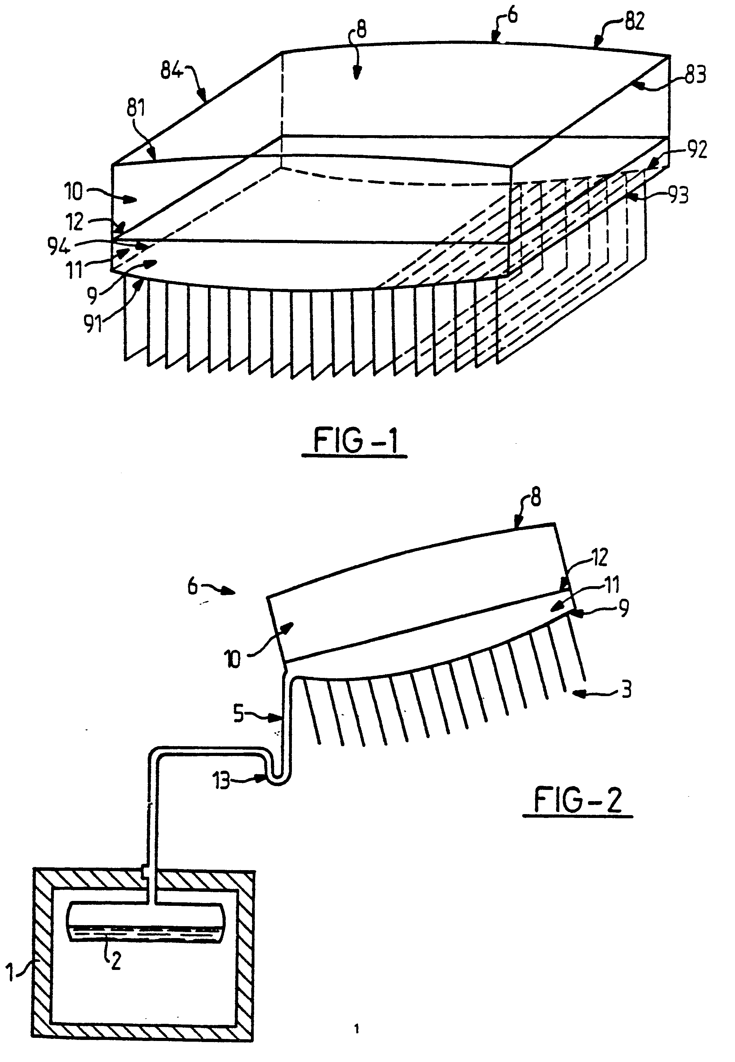

Pour la clarté de la figure 1, seules ont été représentées les intersections du support-plan 12 avec les parois latérales du capteur 6.

De préférence, les faces 8 et 9 ont une forme légèrement concave. En effet, l'intérieur du boitier est mis sous vide partiel ce qui engendre des contraintes appliquées au boitier. Celles-ci sont réduites lorsque l'on adopte cette forme. Il en est de même lorsque les faces 8 et 9 ont une forme légèrement convexe.

Les faces 8 et 9 du boitier sont alors délimitées par deux lignes incurvées (81, 82 ; 91, 92) et par deux segments de droite (83, 84 ; 93, 94).

Par exemple, on dispose perpendiculairement à la face inférieure 9 des ailettes qui, avec l'espace 11, et cette face inférieure 9, forment un condenseur 3. Le nombre et la surface des ailettes sont déterminés de façon à obtenir un condenseur de performance donnée.

Sur la Figure 1, pour des raisons de clarté, les parties cachées de quelques ailettes seulement, ont été représentées en pointillés.

En référence à la Figure 2, le capteur 6 est relié par un conduit 5 à un évaporateur 2 placé dans une caisse isolante 1. Ce conduit 5 relie l'espace 11 à l'évaporateur 2. Le capteur est disposé de façon à ce que le point de jonction du capteur et du conduit 5 soit le point bas du capteur.

Le dispositif réfrigérateur fonctionne grâce à l'apport intermittent d'énergie thermique (dans cet exemple l'énergie est de source solaire) de la façon suivante: en présence d'énergie thermique, la température et la pression montent progressivement dans le capteur 6. Le corps 10 rejette par désorption le fluide sous forme de vapeurs. Les premières vapeurs formées se condesent sur la face 9 du boitier, et coulent dans le conduit 5.

Selon un mode préféré, le conduit 5 comporte un dispositif pour éviter que les vapeurs passent directement de l'espace 11 dans l'évaporateur 2 du fait que la pression dans l'évaporateur est inférieure à celle qui règne dans le condenseur. Ce dispositif peut être constitué par un siphon (dans ce cas, les premières vapeurs condensées passent dans le conduit 5 jusque dans le siphon 13 et obstruent le conduit 5) ou par clapet, ou par tout autre moyen équivalent.

Les vapeurs continuent à se condenser dans le condenseur 3, et par gravité, les vapeurs condensées atteignent l'évaporateur 2.

En l'absence d'apport d'énergie thermique, la température du corps 10 baisse, ainsi que la pression dans le condenseur 3 et le capteur 6. Le corps 10 absorbe le fluide qui s'était accumulé dans le siphon 13, puis le fluide contenu dans l'évaporateur 2, sous forme de vapeurs, ce qui modifie la pression à l'intérieur de l'évaporateur. Le circuit étant hermétiquement clos, et l'évaporation étant endothermique, le fluide restant dans l'évaporateur 2 se solidifie. Il contribue donc à maintenir la température dans la caisse isolante, à une température voisine de 0°C, me lorsque l'adsorption, est terminée. Cette phase d'adsorption produisant le froid se prolonge jusqu'à un nouvel apport d'énergie thermique.

On constate que, grâce à cette modification du capteur, un dispositif incluant un tel capteur est de fabrication beaucoup moins onéreuse qu'un dispositif incluant un capteur classique. En effet, ce dispositif comporte un élément indépendant en moins, puisque capteur et condenseur sont joints. En conséquence, le dispositif comporte également moins de conduits de raccordement. Ces deux faits contribuent à auggmenter sensiblement la fiabilité du dispositif.

En outre, un capteur d'énergie classique est isolé thermiquement sur les faces qui ne sont pas exposées à la source d'énergie de façon à obtenir un meilleur rendement. Dans un capteur d'énergie conforme à l'invention, la face inférieure ne doit pas être isolée thermiquement puisque l'évacuation de la chaleur s'effectue par l'intermédiaire de cette face et, par exemple, des ailettes qui y sont fixées. De ce fait, la fabrication d'un capteur conforme à la présente invention peut être moins onéreuse que celle d'un capteur classique.

Enfin, la suppression du conduit de raccordement entre le capteur 6 et le condenseur 3 dans un capteur conforme à l'invention entraine aussi, au niveau de la réalisation du dispositif, une simplification du conduit de raccordement 5 entre le capteur 6 et l'évaporateur 2. Ceci entraine une réduction de la perte de charge imposée au fluide pendant la phase d'adsorption, quand le fluide circule de l'évaporateur vers le capteur.

En particulier, il est avantageux d'ajouter une résistance thermique sur les parois latérales du capteur entre la face supérieure 8 et la face inférieure 9, de manière à éviter une transmission de la chaleur entre l'une et l'autre. Une telle résistance est par exemple obtenue en découpant les bords latéraux du boitier, sous le niveau du support-plan 12 et de façon sensiblement parallèle aux faces inférieure et supérieure du boitier, et en insérant dans l'espace ainsi ménagé, un joint résistant thermique tel qu'in polymère ou une céramique, ceci de manière à allonger le chemin thermique entre les deux faces sans pour autant augmenter les dimensions dudit capteur.

En outre, la forme et la disposition des ailettes du condenseur 3 peuvent être quelconques, les ailettes pouvant également être supprimées si la face inférieure du boitier baigne dans un fluide caloporteur efficace pour le refroidissement recherché.

**Revendications** pour les Etats contractants: GB, IT

1. Capteur d'énergie thermique constitué d'un boitier comportant une face supérieure exposée à une source d'énergie thermique et une face inférieure à laquelle est raccordé un conduit destiné à être relié avec un dispositif de réfrigération, entre lesquelles est disposé un corps présentant des qualités d'adsorption et de désorption d'un fluide caractérisé en ce qu'un espace est ménagé entre ledit corps et ladite face inférieure (9), cette dernière formant un condenseur (3) séparé dudit corps par ledit espace.

2. Capteur d'énergie thermique selon la revendication 1, caractérisé en ce que des ailettes sont disposées perpendiculairement à ladite face inférieure (9).

3. Capteur d'énergie thermique selon la revendication 1 ou 2, caractérisé en ce que lesdites faces inférieure et supérieure (9, 8) ont une forme légèrement concave.

4. Capteur selon l'une quelconque des revendications 1 à 3, caractérisé en ce que ledit corps est de la zéolithe, ledit fluide utilisé étant de l'eau sous forme solide, liquide ou vaporisée.

5. Capteur selon l'une quelconque des revendications 1 à 3, caractérisé en ce que ledit corps est du charbon actif, ledit fluide utilisé étant du méthanol sous forme solide, liquide ou vaporisée.

6. Capteur selon l'une quelconque des revendications 1 à 5, caractérisé en ce qu'une résistance thermique est disposée sur les parois latérales dudit capteur.

7. Capteur selon la revendication 6, caractérisé en ce que ladite résistance thermique est un joint en polymère.

8. Dispositif dont le fonctionnement comprend une phase d'adsorption d'un fluide dans un corps et une phase de désorption correspondante, notamment dispositif réfrigérateur de type solaire incluant un capteur d'énergie thermique constitué d'un boitier comportant une face supérieure exposée à une source d'énergie thermique et une face inférieure, entre lesquelles est disposé un corps présentant des qualités d'adsorption et de désorption d'un fluide, un évaporateur placé dans une caisse isolante, un conduit reliant le capteur à l'évaporateur, ledit capteur étant disposé de telle façon que le point de jonction du capteur et du conduit soit le point bas du capteur, un espace étant ménagé entre ledit corps et ladite face inférieure, caractérisé en ce que ladite face inférieure (9) forme un condenseur (3) séparé dudit corps par ledit espace.

**Patentansprüche** für die
Vertragsstaaten: FR, DE

1. Wärmeenergiekollektor, der aus einem Gehäuse besteht, welches eine Oberseite umfaßt, die einer Wärmeenergiequelle ausgesezt ist, sowie eine Unterseite umfaßt, an welcher eine Leitung angeschlossen ist, die dazu bestimmt ist, mit einer Kühlvorrichtung verbunden zu werden, zwischen welchen ein Körper angeordnet ist, der Adsorptions- und Desorptionseigenschaften für ein fluides Medium besitzt, wobei ein Zwischenraum zwischen dem genannten Körper und der genannten Unterseite vorgesehen ist, dadurch gekennzeichnet, daß die genannte Unterseite (9) einen Kondensor (3) bildet, der durch den genannten Zwischenraum von dem genannten Körper getrennt ist.

2. Wärmeenergiekollektor nach Anspruch 1,

**Revendications** pour les Etats
contractants: FR, DE

1. Capteur d'energie thermique constitué d'un boitier comportant une face supérieure exposée à une source d'énergie thermique et une face inférieure à laquelle est raccordé un conduit destiné à être relié avec un dispositif de réfrigération, entre lesquelles est disposé un corps présentant des qualités d'adsorption et de désorption d'un fluide, un espace étant ménagé entre ledit corps et ladite face inférieure, caractérisé en ce que ladite face inférieure (9) forme un condenseur (3) séparé dudit corps par ledit espace.

dadurch gekennzeichnet, daß Rippen senkrecht zu der genannten Unterseite (9) angeordnet sind.

3. Wärmeenergiekollektor nach den Ansprüchen 1 oder 2, dadurch gekennzeichnet, daß diese Unterseite und diese Oberseite (9, 8) eine schwach konkave Form aufweisen.

4. Kollektor nach einem der Ansprüche 1 bis 3, dadurch gekennzeichnet, daß der genannte Körper aus Zeolith besteht, wobei das genannte verwendete fluide Medium aus Wasser im festen, flüssigen oder verdampften Zustand besteht.

5. Kollektor nach einem der Ansprüche 1 bis 3, dadurch gekennzeichnet, daß der genannte Körper aus Aktivkohle besteht, wobei das genannte verwendete fluide Medium aus Methanol im festen, flüssigen oder verdampften Zustand besteht.

6. Kollektor nach einem der Ansprüche 1 bis 5, dadurch gekennzeichnet, daß ein Wärmewiderstand an den Seitenwänden des genannten Fühlers angeordnet ist.

7. Kollektor nach Anspruch 6, dadurch gekennzeichnet, daß der genannte Wärmewiderstand eine Dichtung aus einem Polymer ist.

8. Vorrichtung, deren Betrieb eine Adsorptionsphase eines fluiden Mediums in einem Körper sowie eine entsprechende Desorptionsphase umfaßt, insbesondere eine Kühlvorrichtung vom solaren Typ mit einem Wärmeenergiekollektor, der aus einem Gehäuse besteht, das eine einer Wärmeenergiequelle ausgesetzte Oberseite sowie eine Unterseite umfaßt, zwischen welchen ein Körper angeordnet ist, der Adsorptions- und Desorptionseigenschaften für ein fluides Medium aufweist, mit einem in einer Isolierkiste angebrachten Verdampfer, wobei eine Leitung den Kollektor mit dem Verdampfer verbindet, wobei der genannte Kollektor derart eingerichtet ist, daß der Verbindungspunkt zwischen dem Kollektor und der Leitung der Tiefpunkt des Kollektors ist, wobei ein Zwischenraum zwischen dem genannten Körper und der genannten Unterseite vorgesehen ist, dadurch gekennzeichnet, daß die genannte Unterseite (9) einen Kondensor (3) bildet, der von dem genannten Körper über den genannten Zwischenraum getrennt ist.

**Patentansprüche** für die Vertragsstaaten: GB, IT

1. Wärmeenergiekollektor, der aus einem Gehäuse besteht, welches eine Oberseite umfaßt, die einer Wärmeenergiequelle ausgesetzt ist, sowie eine Unterseite umfaßt, an welcher eine Leitung angeschlossen ist, die dazu bestimmt ist, mit einer Kühlvorrichtung verbunden zu werden, zwischen welchen ein Körper angeordnet ist, der Adsorptions- und Desorptionseigenschaften für ein fluides Medium besitzt, dadurch gekennzeichnet, daß ein Zwischenraum zwischen dem genannten Körper und der genannten Unterseite (9) vorgesehen ist, wobei die letztere einen Kondensor (3) bildet, der durch den genannten Zwischenraum von dem genannten Körper getrennt ist.

2. Wärmeenergiekollektor nach Anspruch 1, dadurch gekennzeichnet, daß Rippen senkrecht zu der genannten Unterseite (9) angeordnet sind.

3. Wärmeenergiekollektor nach den Ansprüchen 1 oder 2, dadurch gekennzeichnet, daß diese Unterseite und diese Oberseite (9, 8) eine schwach konkave Form aufweisen.

4. Kollektor nach einem der Ansprüche 1 bis 3, dadurch gekennzeichnet, daß der genannte Körper aus Zeolith besteht, wobei das genannte verwendete fluide Medium aus Wasser im festen, flüssigen oder verdampften Zustand besteht.

5. Kollektor nach einem der Ansprüche 1 bis 3, dadurch gekennzeichnet, daß der genannte Körper aus Aktivkohle besteht, wobei das genannte verwendete fluide Medium aus Methanol im festen, flüssigen oder verdampften Zustand besteht.

6. Kollektor nach einem der Ansprüche 1 bis 5, dadurch gekennzeichnet, daß ein Wärmewiderstand an den Seitenwänden des genannten Kollektors angeordnet ist.

7. Kollektor nach Anspruch 6, dadurch gekennzeichnet, daß der genannte Wärmewiderstand eine Dichtung aus einem Polymer ist.

8. Vorrichtung, deren Betrieb eine Adsorptionsphase eines fluiden Mediums in einem Körper sowie eine entsprechende Desorptionsphase umfaßt, insbesondere eine Kühlvorrichtung vom solaren Typ mit einem Wärmeenergiekollektor, der aus einem Gehäuse besteht, das eine einer Wärmeenergiequelle ausgesetzte Oberseite sowie eine Unterseite umfaßt, zwischen welchen ein Körper angeordnet ist, der Adsorptions- und Desorptionseigenschaften für ein fluides Medium aufweist, mit einem in einer Isolierkiste angebrachten Verdampfer, wobei eine Leitung den Kollektor mit dem Verdampfer verbindet, wobei der genannte Kollektor derart eingerichtet ist, daß der Verbindungspunkt zwischen dem Kollektor und der Leitung der Tiefpunkt des Kollektors ist, dadurch gekennzeichnet, daß ein Zwischenraum zwischen dem genannten Körper und der genannten Unterseite (9) vorgesehen ist, wobei die letztere einen Kondensor (3) bildet, der von dem genannten Körper über den genannten Zwischenraum getrennt ist.

**Claims** for the contracting states FR, DE.

1. Thermal energy collector composed of a casing comprising an upper face exposed to a source of thermal energy and a lower face to which there is connected a duct intended to be connected to a refrigeration device, between which faces there is disposed a body exhibiting properties of adsorption and of desorption of a fluid, a space being provided between the said body and the said lower face, characterized in that the said lower face (9) forms a condenser (3) separated from the said body by the said space.

2. Thermal energy collector according to claim 1, characterized in that fins are disposed perpendicular to the said lower face (9).

3. Thermal energy collector according to claim 1 or 2, characterized in that the said lower and upper faces (9, 8) have a slightly concave shape.

4. Collector according to any one of Claims 1 to 3, characterized in that the said body is made of zeolite, the said fluid employed being water in the solid, liquid or vaporized form.

5. Collector according to any one of Claims 1 to 3, characterized in that the said body is made of activated carbon, the said fluid employed being methanol in the solid, liquid or vaporized form.

6. Collector according to any one of Claims 1 to 5, characterized in that a thermal resistance is disposed on the lateral walls of the said collector.

7. Collector according to Claim 6, characterized in that the said thermal resistance is a polymer seal.

8. Device, the operation of which comprises a phase of adsorption of a fluid in a body and a corresponding desorption phase, in particular a refrigerating device of the solar type including a thermal energy collector composed of a casing comprising an upper face exposed to a source of thermal energy and a lower face, between which faces there is disposed a body exhibiting properties of adsorption and of desorption of a fluid, an evaporator located within an insulating box, a duct connecting the collector to the evaporator, the said collector being disposed in such a manner that the point of junction of the collector and of the duct is the low point of the collector, a space being provided between the said body and the said lower face, characterized in that the said lower face (9) forms a condenser (3) separated from the said body by the said space.

Claims for the contracting states: GB, IT

1. Thermal energy collector composed of a casing comprising an upper face exposed to a source of thermal energy and a lower face to which there is connected a duct intended to be connected to a refrigeration device, between which faces there is disposed a body exhibiting properties of adsorption and of desorption of a fluid, characterized in that a space is provided between the said body and the said lower face (9), the latter forming a condenser (3) separated from the said body by the said space.

2. Thermal energy collector according to Claim 1, characterized in that fins are disposed perpendicular to the said lower face (9).

3. Thermal energy collector according to Claim 1 or 2, characterized in that the said lower and upper faces (9, 8) have a slightly concave shape.

4. Collector according to any one of Claims 1 to 3, characterized in that the said body is made of zeolite, the said fluid employed being water in the solid, liquid or vaporized form.

5. Collector according to any one of Claims 1 to 3, characterized in that the said body is made of activated carbon, the said fluid employed being methanol in the solid, liquid or vaporized form.

6. Collector according to any one of Claims 1 to 5, characterized in that a thermal resistance is disposed on the lateral walls of the said collector.

7. Collector according to Claim 6, characterized in that the said thermal resistance is a polymer seal.

8. Device, the operation of which comprises a phase of adsorption of a fluid in a body and a corresponding desorption phase, in particular a refrigerating device of the solar type including a thermal energy collector composed of a casing comprising an upper face exposed to a source of thermal energy and a lower face, between which faces there is disposed a body exhibiting properties of adsorption and of desorption of a fluid, an evaporator located within an insulating box, a duct connecting the collector to the evaporator, the said collector being disposed in such a manner that the point of junction of the collector and of the duct is the low point of the collector, characterized in that a space is provided between the said body and the said lower face (9), the latter forming a condenser (3) separated from the said body by the said space.

FIG -1

FIG -2